# EUROPEAN PATENT APPLICATION

(11) **EP 4 851 519 A1**
(43) Date of publication of application: **09.12.2026**
(21) Application number: 24922067.4
(22) Date of filing: 29.08.2024
(51) Int. Cl.: F16L 59/147, F16L 9/10, B32B 1/08, B32B 13/04, B32B 18/00

(54) **HIGH TEMPERATURE GAS PIPE**

(30) Priority: 31.01.2024 JP 2024013031
(71) Applicant: Nippon Steel Corporation, Tokyo 100-8071 (JP)
(72) Inventor: NITTA Michio, Tokyo 100-8071 (JP)
(74) Representative: Vossius & Partner Patentanwälte Rechtsanwälte mbB
(86) International application number: PCT/JP2024/030857
(87) International publication number: WO 2025/163955

(57) **Abstract**

A high-temperature gas pipe for conveying a high-temperature gas containing water vapor makes it possible to achieve a reduction in size and weight of the pipes by using a microporous thermal insulation material while suppressing deterioration of thermal insulation performance due to a hydration reaction. The high-temperature gas pipe for conveying a high-temperature gas containing water vapor includes: at least one refractory layer constituting a working surface inside a refractory structure of the pipe; a water-impermeable layer laminated on an outer side of the at least one refractory layer; a microporous thermal insulation layer laminated on an outer side of the water-impermeable layer; and an outer shell layer formed on an outer side of the microporous thermal insulation layer.

## Description

### TECHNICAL FIELD

The present invention relates to a high-temperature gas pipe.

### BACKGROUND ART

Various refractory structures have been proposed for pipes for conveying high-temperature fluids. To provide an inner wall of pipes, vessels, or the like with resistance to thermal shock caused by large temperature fluctuations of an internal fluid, for example, Patent Literature 1 discloses a technique in which the inner wall subjected to thermal cycles by the internal fluid is coated with a titanium layer and a mullite layer to provide a thermal insulation structure. Patent Literature 2 discloses a tubular thermal insulation wall for preventing gaps in a radial direction of a pipe and gaps at connection portions. The tubular thermal insulation wall is provided by forming a thermal insulation structure such that a blanket-like material mainly composed of ceramic fibers is used for a low-temperature side inside the pipe and a tubular rigid molded body mainly composed of ceramic fibers is used for a high-temperature side, interposing an inorganic castable monolithic material that expands and hardens at normal temperature between the blanket-like material and an inner wall of the pipe, and pressure-bonding the thermal insulation structure to the inner wall of the pipe.

Meanwhile, microporous thermal insulation materials are known to exhibit thermal insulation performance superior to that of conventional insulation materials such as calcium silicate and ceramic fibers. Specifically, a microporous thermal insulation material is formed by using, as a main raw material, a spherical hollow-structure material having a particle diameter in a range from 5 nm to 30 nm to form closed micropores having a diameter of 100 nm or less. For example, WDS (registered trademark), which is a nano insulation material using fumed silica as a raw material, is known. As other examples of the microporous thermal insulation material, aerogels such as silica aerogels and nanoporous silica described in Patent Literature 3 and Patent Literature 4 are also known. In the microporous thermal insulation material, heat transfer due to internal air convection is suppressed, thereby achieving high thermal insulation performance. Using the microporous thermal insulation material having high thermal insulation performance makes it possible to reduce the size and weight of apparatuses and equipment.

### CITATION LIST

### PATENT LITERATURE(S)

Patent Literature 1: JP H05-287553 A
Patent Literature 2: JP S59-162187 A
Patent Literature 3: JP 2022-082299 A
Patent Literature 4: International Publication No. WO 2017/038646

### SUMMARY OF THE INVENTION

### PROBLEM(S) TO BE SOLVED BY THE INVENTION

Even in the thermal insulation structures of pipes as described in Patent Literature 1 and Patent Literature 2, it is possible to reduce the size and weight of pipes by using a microporous thermal insulation material. However, in the case of a high-temperature gas pipe for conveying a high-temperature gas containing water vapor, water vapor that has permeated from an interior of the pipe through a porous refractory structure condenses into water. When the condensed water comes into contact with the microporous thermal insulation material, a hydration reaction damages a structure of closed micropores to deteriorate thermal insulation performance.

Accordingly, an object of the invention is to provide a high-temperature gas pipe for conveying a high-temperature gas containing water vapor, which makes it possible to reduce size and weight of the pipe by using a microporous thermal insulation material while suppressing deterioration of thermal insulation performance due to a hydration reaction.

### MEANS FOR SOLVING THE PROBLEM(S)

[1] A high-temperature gas pipe for conveying a high-temperature gas containing water vapor, including: at least one refractory layer constituting a working surface inside a refractory structure of the pipe; a water-impermeable layer laminated on an outer side of the at least one refractory layer; a microporous thermal insulation layer laminated on an outer side of the water-impermeable layer; and an outer shell layer formed on an outer side of the microporous thermal insulation layer.
[2] The high-temperature gas pipe according to [1], in which at least one refractory layer or thermal insulation layer is laminated between the water-impermeable layer and the microporous thermal insulation layer.
[3] The high-temperature gas pipe according to [2], in which a wear refractory layer, a thermal insulation brick layer, a castable refractory layer, and the microporous thermal insulation layer are laminated in order from the working surface side, and the water-impermeable layer is laminated between the thermal insulation brick layer and the castable refractory layer.
[4] The high-temperature gas pipe according to [1], in which the water-impermeable layer is adjacent to the microporous thermal insulation layer.
[5] The high-temperature gas pipe according to [4], in which a wear refractory layer, a thermal insulation brick layer, a castable refractory layer, and the microporous thermal insulation layer are laminated in order from the working surface side, and the water-impermeable layer is laminated between the castable refractory layer and the microporous thermal insulation layer.
[6] The high-temperature gas pipe according to any one of [1] to [5], in which the microporous thermal insulation layer is formed of WDS (registered trademark).

According to the above configuration, since the water-impermeable layer is laminated between the refractory layer constituting the working surface inside the pipe and the microporous thermal insulation layer in the high-temperature gas pipe, water vapor does not reach the microporous thermal insulation layer. Accordingly, it is possible to reduce the size and weight of the pipe while suppressing a hydration reaction of the microporous thermal insulation material. Since water vapor does not reach the microporous thermal insulation layer, it is also possible, for example, to enhance thermal insulation performance to such an extent that a temperature of the microporous thermal insulation layer becomes lower than a dew point temperature of the gas.

### BRIEF DESCRIPTION OF DRAWING(S)

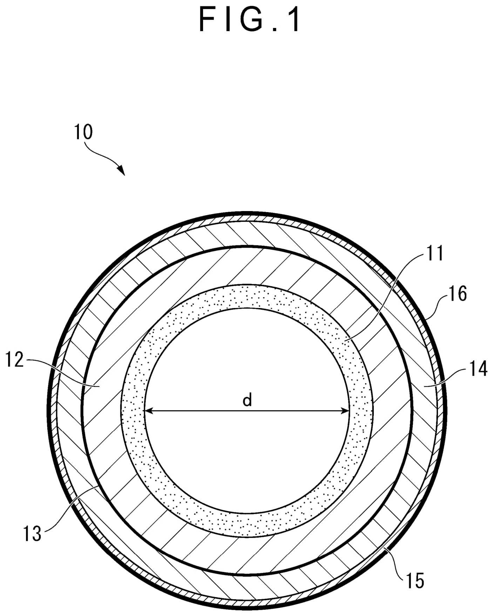

Fig. 1 is a cross-sectional view of a high-temperature gas pipe according to an exemplary embodiment of the invention.

### DESCRIPTION OF EMBODIMENT(S)

Referring to the accompanying drawing, a preferred exemplary embodiment of the invention will be described in detail below. In the specification and the drawing, components having substantially the same functional configuration are denoted by the same reference numerals, and redundant descriptions thereof are omitted.

Fig. 1 is a cross-sectional view of a high-temperature gas pipe according to an exemplary embodiment of the invention. In the illustrated example, the high-temperature gas pipe 10 has a structure in which, in order from a working surface (innermost surface) side inside the pipe, a wear refractory layer 11, a thermal insulation brick layer 12, a water-impermeable layer 13, a castable refractory layer 14, and a microporous thermal insulation layer 15 are laminated, and an outer shell layer 16 is formed on an outer side of the microporous thermal insulation layer 15. The wear refractory layer 11 is a refractory having excellent high-temperature strength and capable of withstanding a working-surface temperature during conveyance of the high-temperature gas. Specifically, it is preferable to use an alumina-based refractory as the wear refractory layer 11. The thermal insulation brick layer 12 is formed of a refractory material having thermal insulation properties to prevent heat from escaping from the working surface, while exhibiting high-temperature strength sufficient to withstand internal temperatures equivalent to those of the wear refractory. Specifically, it is preferable to use a mullite-based refractory as the thermal insulation brick layer 12.

The alumina-based refractory desirably has an alumina content of 90% or more, and, in order to inhibit intrusion of a conveyed gas, desirably has a small number of through pores and a porosity of 20% or less.

The high-temperature gas pipe according to the exemplary embodiment of the invention is a refractory structure for conveying a high-temperature gas containing water vapor. Accordingly, during use of the pipe, neither lowering of a melting point nor wear occurs due to high-temperature reactions between the refractory constituting the working surface inside the pipe and the high-temperature gas. In molten metal vessels such as converters used in steel refining, a working surface of a wear refractory suffers wear due to melting loss. In contrast, in the application of the high-temperature gas pipe of the invention, the working surface of the wear refractory does not suffer wear due to melting loss.

The water-impermeable layer 13 prevents permeation of water vapor that has permeated from inside the pipe through porous refractory structures of the wear refractory layer 11 and the thermal insulation brick layer 12, or permeation of water produced by condensation of the water vapor. Specifically, the water-impermeable layer 13 is formed by shaping a metal material such as iron, stainless steel, or aluminum into a tubular shape or a foil shape. The castable refractory layer 14 is a thermal insulation layer formed of an unshaped (castable) refractory for dimensional adjustment. The castable refractory layer 14 is also a refractory layer that does not suffer wear due to melting loss in the application of the high-temperature gas pipe of the invention. The castable refractory is formed by mixing refractory aggregates and a binder such as alumina cement.

It should be noted that the refractory layers in the high-temperature gas pipe 10 of the invention are not limited to a three-layer structure including the wear refractory layer 11, the thermal insulation brick layer 12, and the castable refractory layer 14; it is sufficient that the high-temperature gas pipe 10 includes at least one refractory layer. For example, the high-temperature gas pipe may have a structure in which the castable refractory layer is omitted, and the wear refractory layer 11, the thermal insulation brick layer 12, the water-impermeable layer 13, and the microporous thermal insulation layer 15 are laminated in order from the working surface side inside the pipe, and the outer shell layer 16 is formed on the outer side of the microporous thermal insulation layer 15. Alternatively, the order in which the thermal insulation brick layer 12 and the castable refractory layer 14 are formed from the working surface side may be reversed.

From the viewpoint of reducing the size and weight of the pipe, it is preferable that the thickness of each layer is as small as possible. The thickness of each layer is not particularly limited; however, for example, the thickness of the wear refractory layer may be 120.0 mm or less and may be 10.0 mm or more. In addition, for example, the thickness of the castable refractory layer may be 150.0 mm or less and may be 130.0 mm or more. The thickness of the thermal insulation brick layer may be, for example, 200.0 mm or less and may be 50.0 mm or more. In addition, for example, the thickness of the water-impermeable layer may be 0.1 mm or more and 0.5 mm or less.

The microporous thermal insulation layer 15 is a layer formed of the microporous thermal insulation material as described above. More specifically, the microporous thermal insulation material is formed of a spherical hollow-structure material as a main raw material to include closed micropores. Examples of the main raw material include fumed silica, aerogels such as silica aerogels, and nanoporous silica. The spherical hollow-structure material has a particle diameter, for example, in a range from 5 nm to 30 nm, and the closed micropores have a diameter, for example, of 100 nm or less. WDS (registered trademark), which is a nano insulation material using fumed silica as a raw material, is also an example of the microporous thermal insulation material. The raw material of the microporous thermal insulation layer 15 is not limited to silica-based raw materials; other raw materials, such as alumina-based raw materials, may also be used. Specific examples include mullite, which is a mixed-crystal material of alumina and silica. The outer shell layer16 is disposed on an outer side of the microporous thermal insulation layer 15 and maintains the structure of the high-temperature gas pipe 10 to protect the microporous thermal insulation layer 15. Specifically, the outer shell layer 16 is formed of a metal pipe such as an iron pipe, or a resin pipe. An iron pipe is preferable from viewpoints of strength and cost.

The thickness of the microporous thermal insulation layer is not particularly limited; for example, an upper limit thereof may be 20.0 mm or less. A lower limit of the thickness of the microporous thermal insulation layer is also not particularly limited; however, generally, 5.0 mm is a manufacturing limit.

In the high-temperature gas pipe 10 including the microporous thermal insulation layer 15 as described above, the microporous thermal insulation layer is superior in thermal insulation performance to the wear refractory, the thermal insulation brick, and the castable refractory forming the other layers. Accordingly, sufficient thermal insulation can be achieved with a thinner thickness, making it possible to reduce the size and weight of the pipe. Specifically, for example, when an inner diameter of the pipe is determined based on a gas flow rate, an outer diameter thereof can be further reduced. Alternatively, when the outer diameter of the pipe is determined due to spatial constraints, the inner diameter thereof can be further increased to increase the gas flow rate.

On the other hand, as described above, when a high-temperature gas containing water vapor, such as coke oven gas (COG), is conveyed in the high-temperature gas pipe 10, water vapor that has permeated from inside the pipe through the porous refractory structure may condense into water. If this condensed water comes into contact with the microporous thermal insulation layer 15, a hydration reaction may occur. When a hydration reaction occurs, the structure of closed micropores in the microporous thermal insulation material is damaged to deteriorate thermal insulation performance. This phenomenon is not limited to cases where the raw material is silica-based; similar phenomena also occur in microporous thermal insulation materials made of other raw materials, such as alumina-based materials.

Accordingly, in the exemplary embodiment, by disposing the water-impermeable layer 13 between the refractory layers constituting the working surface inside the pipe, namely the wear refractory layer 11 and the thermal insulation brick layer 12, and the microporous thermal insulation layer 15, water vapor is prevented from reaching the microporous thermal insulation layer 15, thereby preventing deterioration of thermal insulation performance due to a hydration reaction in the microporous thermal insulation layer 15. As a result, even when the high-temperature gas pipe 10 conveys a high-temperature gas containing water vapor, it is possible to achieve reduction in size and weight of the pipe while maintaining thermal insulation performance provided by the microporous thermal insulation layer 15. Since water vapor does not reach the microporous thermal insulation layer 15, it is also possible, for example, to enhance thermal insulation performance to such an extent that a temperature of the microporous thermal insulation layer 15 becomes lower than a dew point temperature of the gas. Alternatively, since the heat resistance temperature of a steel shell generally forming the outer shell layer 16 is 600 degrees C, or approximately 250 degrees C depending on the material, it is also possible to design such that the temperature at the interface between the microporous thermal insulation layer 15 and the outer shell layer 16 significantly exceeds 100 degrees C, for example, is 250 degrees C or higher, while remaining within a range of 600 degrees C or lower. In this case, by reducing the thicknesses of the refractory layers, the high-temperature gas pipe can be further reduced in size and weight. The temperature at the interface between the microporous thermal insulation layer 15 and the outer shell layer 16 can be calculated by heat conduction calculation based on a temperature of a gas conveyed in the high-temperature gas pipe, an ambient temperature, thicknesses of the respective layers, and thermal conductivities thereof. Alternatively, the temperature may be measured directly by arranging a thermocouple or the like. Further, the temperature may be calculated by measuring emissivity of an outer surface of the outer shell layer 16. The outer shell layer 16 has a higher thermal conductivity than the thermal insulation material, so that a temperature difference between the outer surface and the inner surface is small; therefore, the temperature of the outer surface of the outer shell layer 16 may be regarded as the temperature at the interface between the microporous thermal insulation layer 15 and the outer shell layer 16.

It should be noted that the refractory layers laminated on an inner side of the water-impermeable layer 13 are not limited to a two-layer structure including the wear refractory layer 11 and the thermal insulation brick layer 12; it is sufficient that at least one refractory layer constituting the working surface inside the pipe is disposed. In the above example, at least one refractory layer or thermal insulation layer, specifically the castable refractory layer 14, is laminated between the water-impermeable layer 13 and the microporous thermal insulation layer 15, and the water-impermeable layer 13 is laminated between the thermal insulation brick layer 12 and the castable refractory layer 14. However, the invention is not limited to this example, and the water-impermeable layer 13 and the microporous thermal insulation layer 15 may be adjacent to each other. Specifically, for example, the wear refractory layer 11, the thermal insulation brick layer 12, the castable refractory layer 14, and the microporous thermal insulation layer 15 may be laminated in order from the working surface side, and the water-impermeable layer 13 may be laminated between the castable refractory layer 14 and the microporous thermal insulation layer 15. Alternatively, two or more refractory layers or thermal insulation layers may be laminated between the water-impermeable layer 13 and the microporous thermal insulation layer 15. The castable refractory layer 14 has both refractory properties and thermal insulation properties, and therefore can serve as either a refractory layer or a thermal insulation layer.

In addition, the microporous thermal insulation layer 15 does not necessarily have to be in contact with the outer shell layer 16, and another thermal insulation layer may be laminated between the microporous thermal insulation layer 15 and the outer shell layer 16. Materials such as WDS (registered trademark) that form the microporous thermal insulation layer 15 have a maximum service temperature of less than 1,000 degrees C, and have a thermal conductivity that decreases as temperature decreases. Therefore, from a viewpoint of reducing the size and weight of the pipe by means of the microporous thermal insulation layer 15, it is preferable to dispose the microporous thermal insulation layer 15 as a layer located on the outer side of the other refractory layers and in a lower-temperature region.

Hereinafter, results of an examination using the heat conduction calculation will be described for design examples of a high-temperature gas pipe that satisfy the conditions of the exemplary embodiment of the invention described above. In the heat conduction calculation, an inner diameter d at the working surface of the high-temperature gas pipe was set to 1,000 mm, and thermal conductivities were set, in order from the working surface side, to 1.5 W/m·K for the wear refractory layer, 0.8 W/m·K for the thermal insulation brick layer, 0.5 W/m·K for the castable refractory layer, 40 W/m·K for the water-impermeable layer, 0.03 W/m·K for the microporous thermal insulation material (WDS (registered trademark) layer, and 40 W/m·K for the outer shell layer (steel shell). It should be noted that, in the following examples, unlike the example illustrated in Fig. 1 described above, the water-impermeable layer is laminated between the castable refractory layer and the microporous thermal insulation layer. In addition, a temperature of a gas conveyed in the high-temperature gas pipe was set to 1,000 degrees C, and an ambient temperature was set to 25 degrees C.

Table 1 shows examples of layer configurations of the high-temperature gas pipe and results of the heat conduction calculation for each case. The smaller the amount of heat dissipation to the outside calculated in each example, the higher the thermal insulation performance of the high-temperature gas pipe. The interface temperatures shown in Table 1 indicate temperatures, calculated using the heat conduction calculation, at the interface between the microporous thermal insulation layer and the steel shell.

**Table 1**

| | d [mm] | Thickness of wear refractory layer [mm] | Thickness of thermal insulation brick layer [mm] | Thickness of castable refractory layer [mm] | Thickness of water-impermeable layer [mm] | Thickness of WDS layer [mm] | Thickness of steel shell [mm] | Outer diameter of pipe [mm] | Gas temp. [°C] | Interface temp. [°C] | Heat dissipation amount [kcal/m·h] |
|---|---|---|---|---|---|---|---|---|---|---|---|
| Comp. | | 114.0 | 200.0 | 150.0 | - | - | | 1948.0 | | - | 6644.3 |
| Ex. 1 | | 114.0 | 200.0 | 145.0 | 0.2 | 5.0 | | 1948.4 | | 113.1 | 5625.7 |
| Ex. 2 | | 114.0 | 200.0 | 140.0 | 0.2 | 10.0 | | 1948.4 | | 104.0 | 4877.0 |
| Ex. 3 | | 114.0 | 200.0 | 137.5 | 0.2 | 12.5 | | 1948.4 | | 100.2 | 4572.3 |
| Ex. 4 | | 114.0 | 200.0 | 135.0 | 0.2 | 15.0 | | 1948.4 | | 96.8 | 4303.0 |
| Ex. 5 | 1000 | 114.0 | 200.0 | 130.0 | 0.2 | 20.0 | 10.0 | 1948.4 | 1000 | 90.8 | 3848.5 |
| Ex. 6 | | 114.0 | 200.0 | 0.0 | 0.2 | 5.0 | | 1658.4 | | 150.2 | 7699.3 |
| Ex. 7 | | 114.0 | 100.0 | 0.0 | 0.2 | 5.0 | | 1458.4 | | 179.0 | 9243.5 |
| Ex. 8 | | 114.0 | 50.0 | 0.0 | 0.2 | 5.0 | | 1358.4 | | 198.8 | 10384.9 |
| Ex. 9 | | 114.0 | 0.0 | 0.0 | 0.2 | 5.0 | | 1258.4 | | 224.3 | 11968.9 |
| Ex. 10 | | 10.0 | 0.0 | 0.0 | 0.2 | 5.0 | | 1050.4 | | 264.6 | 13659.6 |

### Layer configuration of high-temperature gas pipe

In Table 1, Comparative and Examples are designed to have substantially the same outer diameter of the pipe. In Comparative, the thermal insulation layers consist of the wear refractory layer, the thermal insulation brick layer, and the castable refractory layer, without laminating the microporous thermal insulation layer or the water-impermeable layer. In Examples 1 to 5, a part of the castable refractory layer in Comparative is replaced with the microporous thermal insulation layer, and the water-impermeable layer is laminated between the castable refractory layer and the microporous thermal insulation layer.

It can be seen that, even in Example 1 where the microporous thermal insulation layer is formed with the thinnest thickness of 5.0 mm, the amount of heat dissipation is significantly reduced as compared with that of Comparative, and thermal insulation performance is improved even with the same outer diameter of the pipe as that of Comparative. This means that, for the same thermal insulation performance, the outer diameter of the pipe can be further reduced, that is, reduction in size and weight of the pipe is possible. When the microporous thermal insulation layer is further thickened as in Examples 2 to 5, thermal insulation performance is further improved. In Examples 4 and 5, as a result of improved thermal insulation performance, the interface temperature between the microporous thermal insulation layer and the steel shell becomes lower than 100 degrees C. In these cases, if water vapor reaches the microporous thermal insulation layer, water may be generated by condensation of the water vapor, and a hydration reaction of the microporous thermal insulation material may occur. However, in Examples, since the water-impermeable layer is laminated, water vapor does not reach the microporous thermal insulation layer, thereby suppressing a hydration reaction of the microporous thermal insulation material and maintaining thermal insulation performance.

In Examples 6 to 10, each pipe was further reduced in size and weight by thinning the refractory layers as compared with the layer configuration of Example 1 described above. In Examples 6 to 10, the castable refractory layer was omitted. In Examples 7 to 10, the thermal insulation brick layer was gradually thinned. In Example 10, the wear refractory layer was also thinned. In these examples, the interface temperature between the microporous thermal insulation layer and the steel shell was significantly higher than 100 degrees C. However, as described above, when the interface temperature was 600 degrees C or lower (Examples 6 to 10), or 250 degrees C or lower (Examples 6 to 9), the interface temperature was within an allowable temperature range relative to the heat resistance temperature of the steel shell. Therefore, if the amount of heat dissipation to the outside is within an acceptable range, the designs according to these examples can be adopted. It should be noted that, in order to thin the refractory layers, it is not necessarily required to omit the castable refractory layer, and any layer may be thinned.

In the case of the high-temperature gas pipe, since a ratio of the pipe thickness to the outer diameter is relatively high, providing the microporous thermal insulation layer yields a significant downsizing effect by thinning a refractory layer while maintaining thermal insulation performance. For example, in Comparative, a ratio of an outer diameter to an inner diameter d of the pipe exceeds 1.9, whereas in Example 6, the ratio of the outer diameter to the inner diameter d of the pipe is 1.7 or less. Similarly, the ratio is 1.5 or less in Example 7, 1.4 or less in Examples 8 and 9, and 1.1 or less in Example 10.

The results described above demonstrate that, in the high-temperature gas pipe, by laminating the water-impermeable layer between the refractory layer constituting the working surface inside the pipe and the microporous thermal insulation layer, it is possible to reduce the size and weight of the pipe while suppressing a hydration reaction of the microporous thermal insulation material. For example, when a low surface temperature of the pipe is required due to reasons such as exposure of an outer surface of the pipe to a working space, even if thermal insulation performance is enhanced to such an extent that an interface temperature between the microporous thermal insulation layer and the outer shell layer becomes lower than 100 degrees C, water vapor does not condense, and thermal insulation performance can be maintained while suppressing a hydration reaction of the microporous thermal insulation material. The thickness of the microporous thermal insulation layer is not limited; however, a range from 5.0 mm to 20.0 mm, as used in the above Examples, is exemplified.

### EXPLANATION OF CODES

10: high-temperature gas pipe, 11: wear refractory layer, 12: thermal insulation brick layer, 13: water-impermeable layer, 14: castable refractory layer, 15: microporous thermal insulation layer, 16: outer shell layer

## Claims

1. A high-temperature gas pipe for conveying a high-temperature gas containing water vapor, comprising:
at least one refractory layer constituting a working surface inside a refractory structure of the pipe;
a water-impermeable layer laminated on an outer side of the at least one refractory layer;
a microporous thermal insulation layer laminated on an outer side of the water-impermeable layer; and
an outer shell layer formed on an outer side of the microporous thermal insulation layer.

2. The high-temperature gas pipe according to claim 1, wherein at least one refractory layer or thermal insulation layer is laminated between the water-impermeable layer and the microporous thermal insulation layer.

3. The high-temperature gas pipe according to claim 2, wherein a wear refractory layer, a thermal insulation brick layer, a castable refractory layer, and the microporous thermal insulation layer are laminated in order from the working surface side, and the water-impermeable layer is laminated between the thermal insulation brick layer and the castable refractory layer.

4. The high-temperature gas pipe according to claim 1, wherein the water-impermeable layer is adjacent to the microporous thermal insulation layer.

5. The high-temperature gas pipe according to claim 4, wherein a wear refractory layer, a thermal insulation brick layer, a castable refractory layer, and the microporous thermal insulation layer are laminated in order from the working surface side, and the water-impermeable layer is laminated between the castable refractory layer and the microporous thermal insulation layer.

6. The high-temperature gas pipe according to any one of claims 1 to 5, wherein the microporous thermal insulation layer is formed of WDS (registered trademark).
